# EUROPÄISCHE PATENTSCHRIFT

(11) **EP 3 953 110 B1**
(45) Veröffentlichungstag und Bekanntmachung des Hinweises auf die Patenterteilung: **06.05.2026**
(21) Anmeldenummer: 20712365.4
(22) Anmeldetag: 24.03.2020
(51) Int. Cl.: B25F 5/02, B23Q 11/00, B23D 59/00, B24B 55/05

(54) **STAUBHAUBE FÜR EIN WERKZEUGGERÄT**
DUST HOOD FOR A TOOL ASSEMBLY
CAPOT ANTI-POUSSIÈRE POUR UN OUTIL

(30) Priorität: 08.04.2019 EP 19167793
(43) Veröffentlichungstag der Anmeldung: 16.02.2022
(73) Patentinhaber: Hilti Aktiengesellschaft, 9494 Schaan (LI)
(72) Erfinder: HUBER, Franz, 86865 Markt Wald / Oberneufnach (DE); HANSLMEIER, Xaver, 87665 Mauerstettten (DE)
(74) Vertreter: Hilti Aktiengesellschaft Corporate Intellectual Property
(86) Internationale Anmeldenummer: PCT/EP2020/058082
(87) Internationale Veröffentlichungsnummer: WO 2020/207781

(56) Entgegenhaltungen:
- EP-A2- 1 266 720
- DE-A1- 2 943 001
- DE-U1- 202013 001 142
- US-A1- 2014 041 142
- US-A1- 2018 236 574

## Beschreibung

Die vorliegende Erfindung betrifft eine Staubhaube für ein Werkzeuggerät, wobei die Staubhaube einen Absaugbereich umfasst, in den ein von einer Staubsaugvorrichtung kommender Saugschlauch in die Staubhaube einmündet. Die Staubhaube weist im Absaugbereich eine Wölbung auf, wobei mit der Wölbung ein Impulsstoß, der im Rahmen eines Filterabreinigungsvorgangs einer Staubsaugvorrichtung erzeugt wird, durch Reflexion aufgeteilt oder umgelenkt werden kann.

Bei der Arbeit mit Werkzeuggeräten, wie Bohrmaschinen, Trenn- oder Winkelschleifern oder Schlitzgeräten, wird regelmäßig Staub erzeugt, der für den Menschen gesundheitsgefährdend sein kann, insbesondere wenn der Staub eingeatmet wird. Es sind im Stand der Technik Staubhauben bekannt, mit denen die Arbeitsmittel solcher Werkzeuggeräte, wie Bohrer, Meißel oder Trennscheiben, verkleidet sein können. Solche Staubhauben dienen vorzugsweise dazu, den bei der Arbeit mit dem Werkzeuggerät anfallenden Staub aufzunehmen. Vorzugsweise können die Staubhauben mit einer Staubsaugvorrichtung bzw. einem Entstauber verbunden werden, so dass der in der Staubhaube gesammelte Staub mit der Staubsaugvorrichtung oder dem Entstauber abgesaugt werden kann. Dies geschieht üblicherweise durch die Erzeugung eines Unterdrucks, der über einen Saugschlauch an die Staubhaube übertragen wird. Vorzugsweise weisen die Staubhauben für den Anschluss der Staubsaugvorrichtung bzw. des Entstaubers einen Saugschlauchanschluss auf, in dessen Bereich der Saugschlauch in die Staubhaube mündet. Dieser Bereich der Staubhaube wird im Sinne der Erfindung vorzugsweise als Absaugbereich bezeichnet.

Bei konventionellen Staubhauben, die aus dem Stand der Technik bekannt sind, können Staubundichtigkeiten auftreten. Solche Staubundichtigkeiten sind beispielsweise bekannt, wenn die konventionellen Staubhauben mit Schlitzgeräten verbunden sind. Schlitzgeräte sind im Sinne der Erfindung bevorzugt dazu eingerichtet, beispielsweise in einer Wand einen Schlitz zu erzeugen, um in dem "geklopften" Schlitz Leitungen verlegen zu können. Problematisch an dem Auftreten von Undichtigkeiten, in deren Bereich Staub aus den konventionellen Staubhauben nach außen, d.h. in die Umgebung, gelangen kann, ist, dass die entsprechenden Zulassungsnormen stetig niedrigere Grenzwerte für die Staubabgabe vorschreiben, die mit undichten Staubhauben nicht oder nur schwer eingehalten werden können. Insbesondere können die Undichtigkeiten nachteiligerweise dazu führen, dass nicht genug Staub vom Bediener des Werkzeuggeräts ferngehalten werden kann, so dass der Staub von dem Bediener eingeatmet wird und in seine Atemwege gelangen kann. Der Staub umfasst häufig Staubpartikel, die beispielsweise so klein sein können, dass sie lungengängig sind. Andere Staubpartikel können gesundheitsgefährdend oder krebserregend sein.

Ein Austreten von Staub wird bei konventionellen Staubhauben insbesondere im Moment der Filterreinigung beobachtet. Bei der Filterabreinigung wird der Filter des Entstaubers bzw. der Staubsaugvorrichtung von solchem Staub befreit, der sich während des Betriebs im Filter angesammelt hat. Dieser Staub kann im Bereich des Filters beispielsweise einen Filterkuchen bilden, der durch den Filterabreinigungsprozess entfernt wird. Bei der Filterabreinigung kann beispielsweise für einen kurzen Moment die Erzeugung des Unterdrucks im Staubsauger unterbrochen werden, so dass sich die Druckverhältnisse im Staubsauger für einen kurzen Moment so ändern, dass ein Druckstoß erzeugt wird, der auf den Filter wirkt. Mit Hilfe des Druckstoßes kann der Filterkuchen gelockert oder vom Filter gelöst werden. In anderen Fällen kann der Filter aktiv mit einem Gegenluftstrom durchpustet werden, wodurch sich der Filterkuchen vom Filter löst. Diese Maßnahmen können einmal durchgeführt werden oder in einem Abreinigungszyklus wiederholt werden. Beispielsweise kann ein Abreinigungszyklus einer Staubsaugvorrichtung drei Abreinigungsstöße umfassen. Die Durchführung eines Abreinigungszyklus kann zum Beispiel automatisch in regemäßigen Zeiträumen veranlasst oder je nach Bedarf gesteuert werden.

Da beim Abreinigungsvorgang häufig (Druck-)Stöße auf den Filter ausgeübt werden, wird im Sinne der Erfindung bevorzugt auch von einem Abklopfvorgang gesprochen. Häufig wird bei diesem Abklopfvorgang ein Rückstoß im Saugschlauch bzw. ins Innere der Staubhaube verursacht, der bei konventionellen Staubhauben, die aus dem Stand der Technik bekannt sind, unerwünschterweise zum Ausstoß einer Staubwolke führen kann.

Beispielsweise wird in der DE 2 943 001 A1 eine Sägeeinrichtung mit einer Span-Absaugeeinrichtung offenbart.

Die US 2018 236 574 A1 beschreibt eine tragbare Schneidvorrichtung mit einer Staubsammeldüse zum Anschließen einer Staubsammelvorrichtung.

In der EP 1 266 720 A2 wird ein Staubsammler offenbart, der einen oberen Kanal und eine flexible untere Klappe umfasst, wobei die untere Klappe mit dem oberen Staubkanal verbunden ist und darüber hinaus elastisch ausgebildet ist.

Die Aufgabe, die der vorliegenden Erfindung zugrunde liegt, besteht darin, die vorstehend beschriebenen Nachteile des Standes der Technik zu überwinden und eine Staubhaube für ein Werkzeuggerät bereitzustellen, die einerseits besonders dicht ausgebildet ist und mit der andererseits wirksam verhindert werden kann, dass Staub in die Atemwege eines Bedieners des Werkzeuggeräts gelangen kann. Darüber hinaus soll mit der bereitzustellenden Staubhaube der Ausstoß von Staubwolken zum Zeitpunkt der Filterabreinigung verhindert werden.

Die Aufgabe wird gelöst durch den Gegenstand des unabhängigen Anspruchs 1. Vorteilhafte Ausführungsformen zu dem Gegenstand des unabhängigen Anspruchs finden sich in den abhängigen Ansprüchen.

Erfindungsgemäß ist eine Staubhaube für ein Werkzeuggerät vorgesehen, wobei die Staubhaube einen Absaugbereich umfasst, in den ein von einer Staubsaugvorrichtung kommender Saugschlauch in die Staubhaube einmündet. Die Staubhaube ist dadurch gekennzeichnet, dass die Staubhaube im Absaugbereich eine Wölbung aufweist, wobei die Wölbung dazu eingerichtet ist, einen von der Staubsaugvorrichtung kommenden und durch den Saugschlauch in einen Innenbereich der Staubhaube vermittelten Impulsstoß abzuschwächen und wobei die Abschwächung einen Gegenimpuls bewirkt, wobei mit dem Gegenimpuls verhindert wird, dass im Innenbereich der Staubhaube der ein von der Staubsaugvorrichtung erzeugter und vom Saugschlauch vermittelter Unterdruck im Zeitpunkt einer Filterabreinigung zusammenbricht,. Insbesondere sorgt die bevorzugt nach innen ausgebildete Wölbung der Staubhaubenwand dafür, dass der mindestens eine Abreinigungssstoß umgelenkt und davon abgehalten wird, aus dem Absaugraum in einen Innenraum der Staubhaube vorzudringen.

Im Kontext der vorliegenden Erfindung wird eine definierte Wölbung in der Innenwand einer Staubhaube vorgeschlagen, wobei die Wölbung insbesondere im Absaugbereich der Staubhaube angeordnet vorliegt. Die Wölbung sorgt vorteilhafterweise durch ihre charakteristische Ausgestaltung dafür, dass ein möglicher Impulsschlag bzw. eine Druckwelle, der während einer Filterabreinigung der Staubsaugvorrichtung, mit der die vorgeschlagene Staubhaube vorzugsweise verbunden vorliegt, entstehen kann, im Innenraum der Staubhaube aufgeteilt und/oder umgelenkt wird. Vorzugsweise ist die Staubhaube, die vorzugsweise mit einem Werkzeuggerät verbunden vorliegen kann, mit einer Staubsaugvorrichtung verbunden, so dass der bei der Arbeit mit dem Werkzeuggerät entstehende Staub mit der Staubsaugvorrichtung abgesaugt werden kann. Dabei können Druckwellen und/oder Impulsstöße, die bei einem Abreinigungsvorgang der Filter der Staubsaugvorrichtung entstehen, über den Saugschlauch auf die Staubhaube übertragen werden. Das Absaugen von Staub und Staubpartikeln erfolgt vorzugsweise durch die Erzeugung eines Unterdrucks durch die Staubsaugvorrichtung, wobei dieser Unterdruck durch den Saugschlauch, der die Staubhaube mit der Staubsaugvorrichtung verbindet, an die Staubhaube übertragen wird. Dadurch liegt vorzugsweise auch im Inneren der Staubhaube ein Unterdruck vor.

Die Umlenkung eines Impulsstoßes, die durch die Wölbung der Staubhaube erreicht werden kann, erzeugt einen Gegenimpuls, mit dem vorteilhafterweise verhindert werden kann, dass im Innenbereich der Staubhaube der von der Staubsaugvorrichtung erzeugte Unterdruck während der Filterabreinigung zusammenbricht. Dadurch kann auch derjenige Staub, der während der Filterabreinigung bei der Arbeit mit dem Werkzeuggerät entsteht, in der Staubhaube gesammelt und anschließend abgesaugt werden, insbesondere dann, wenn die Filterabreinigung abgeschlossen ist bzw. die volle Saugleistung der Staubsaugvorrichtung wieder verfügbar ist. Bei konventionellen Staubhauben ohne Wölbung in der Innenwand im Absaugbereich kann es bisher leicht vorkommen, dass die bei der Filterabreinigung auftretenden Impulsstöße bis zum Arbeitsmittel des Werkzeuggeräts durchstoßen und unerwünschterweise zu einem Ausströmen einer Staubwolke führen. Mit anderen Worten kann es bei konventionellen Staubhauben vorkommen, dass durch die bei der Filterabreinigung entstehenden Impulsstöße und Druck-wellen eine Staubwolke aus der Staubhaube ausgestoßen wird, so dass der abgegebene Staub in die Atemwege des Bedieners gelangen kann. Die Staubwolke wird insbesondere dadurch erzeugt, dass der Unterdruck innerhalb der Staubhaube zusammenbricht, was bei der vorgeschlagenen, erfindungsgemäßen Staubhaube durch die Vorsehung der definierten Wölbung vorteilhafterweise verhindert wird. Die Wölbung sorgt vorteilhafterweise dafür, dass der Impulsstoß an der Wand, in der die Wölbung vorliegt, reflektiert wird. Insbesondere kann der auf die gewölbte Wand auftreffende Impulsstoß gedanklich in eine Anzahl im Wesentlichen parallel verlaufender Einzelstöße zerlegt werden. Vorzugsweise werden diese gedanklichen Einzelimpulsstöße so an der gewölbten Wand der Staubhaube reflektiert, dass sie in den Absaugbereich zurückgeworfen werden und sich zumindest teilweise auslöschen oder gegenseitig abschwächen. Dadurch wird vorteilhafterweise eine Ausbreitung des Impulsstoßes in den Innenbereich der Staubhaube und ein Zusammenbrechen des dortigen Unterdrucks wirksam verhindert.

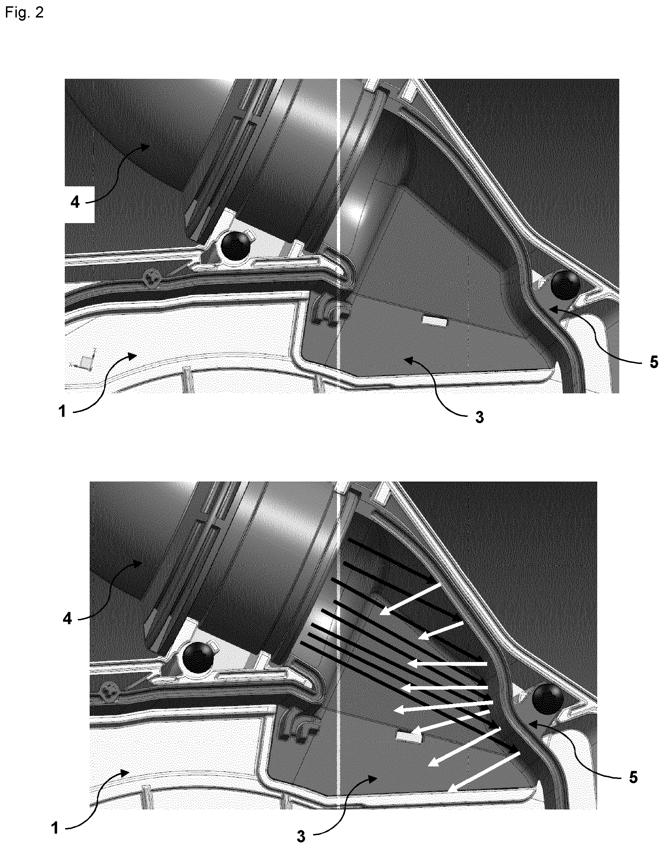

Überraschenderweise kann durch die Vorsehung der Wölbung nicht nur eine Abschwächung bzw. Auslöschung der reflektierten Impulsstöße erreicht werden. Es hat sich gezeigt, dass die reflektierten Impulse vorteilhafterweise auch dazu in der Lage sind, neu ankommende Filterabreinigungsstöße abzuschwächen und/oder auszulöschen. Dies kann insbesondere dann von Vorteil sein, wenn der Filterabreinigungsprozess der Staubsaugvorrichtung, mit der das Werkzeuggerät verbunden vorliegt, mehrere Impuls- bzw. Druckluftstöße umfasst, die nacheinander die Staubhaube erreichen. Vorteilhafterweise ermöglicht die Wölbung der vorgeschlagenen Staubhaube eine Schwächung bzw. Auslöschung von sowohl bereits reflektierten, als auch neu ankommenden Impuls- und/oder Druckluftstößen, mit denen ein Filter der Staubsaugvorrichtung gereinigt bzw. durchgepustet wird, um den Filterkuchen zu lösen. Diese Abschwächung wird insbesondere durch die Pfeile im unteren Bereich von Figur 2 verdeutlicht. Insbesondere werden die neu ankommenden Impulsstöße durch die reflektierten Impulsstöße beim Durchqueren des Absaugraums der Staubhaube so verwirbelt, dass ein weiteres Vordringen der Impulsstöße in den Innenraum der Staubhaube, die von dem Absaugraum durch die Prallwand abgetrennt ist, wirksam vermieden wird. Dadurch wird vorteilhafterweise erreicht, dass im Innenraum der Staubhaube der Unterdruck zum Absaugen des Staubs nicht beeinträchtigt wird.

Es ist im Sinne der Erfindung bevorzugt, dass die Wölbung im Inneren der Staubhaube durch ein Verhältnis von Höhe zu Durchmesser definiert wird. Der Begriff "Durchmesser der Wölbung" beschreibt im Sinne der Erfindung bevorzugt den Abstand zwischen zwei Punkten, in denen die Wölbung aus der ansonsten im Wesentlichen glatten Wand beginnt bzw. endet. Mit anderen Worten können die zwei Punkte, zwischen denen der Durchmesser als Länge vorliegt, als Anfangs- und Endpunkt der Wölbung verstanden werden. Der Durchmesser der Wölbung kann beispielsweise in einem Bereich von 15 bis 35 mm liegen. Der Begriff "Höhe der Wölbung" beschreibt im Sinne der Erfindung bevorzugt, um welche Länge sich die Wölbung auf der ansonsten im Wesentlichen glatten Wand der Staubhaube abhebt. Mit anderen Worten kann die Höhe als Abstand zwischen der ansonsten im Wesentlichen glatten Wand und dem höchsten Punkt der Wölbung verstanden werden. Die Höhe der Wölbung kann beispielsweise in einem Bereich von 5 bis 25 mm liegen. Das Verhältnis von Höhe zu Durchmesser liegt in einem Bereich von 0,14 bis 1,7, wobei insbesondere Werte, die kleiner als 1 sind, bevorzugt sind. Mit anderen Worten ist es im Sinne der Erfindung bevorzugt, dass der Durchmesser der Wölbung größer ist als ihre Höhe, wobei in alternativen Ausführungsformen auch die Höhe der Wölbung größer sein kann als der Durchmesser. Bei der Ermittlung des Verhältnisses von Höhe zu Durchmesser wird vorzugsweise der Wert für die Höhe der Wölbung in Relation gesetzt zu dem Wert für den Durchmesser der Wölbung. Vorzugsweise können die Werte durcheinander geteilt werden, wobei der Wert für die Höhe den Zähler des so erhaltenen Quotienten bildet und der Wert für den Durchmesser den Nenner für das durch den Quotienten beschriebenen Verhältnis. Eine mögliche Ausgestaltung der Wölbung wird in den Figuren dargestellt. Es ist im Sinne der Erfindung insbesondere bevorzugt, dass die Wölbung nach innen, d.h. in den Absaugraum der Staubhaube, ausgebildet ist. In diesem Fall kann die Wölbung insbesondere als Eindellung betrachtet werden. Es kann aber auch bevorzugt sein, dass die Wölbung nach außen ausgebildet ist.

Der Staub, der bei der Arbeit mit dem Werkzeuggerät anfällt, kann Staubpartikel mit unterschiedlicher Größe bzw. unterschiedlichen Durchmessern und Geometrien umfassen. Beispielsweise können sehr kleine, für das menschliche Auge kaum sichtbare Partikel Bestandteil des Staubs sein. Es kann aber auch passieren, dass bei der Arbeit mit dem Werkzeuggerät, beispielsweise bei der Bearbeitung einer Wand, einer Mauer oder Mauerwerk, größere Abbaupartikel entstehen, die zunächst zu groß sind, um durch den Saugschlauch, der die Staubhaube mit der Staubsaugvorrichtung verbindet, in einen Sammelbehälter der Staubsaugvorrichtung transportiert zu werden. Solche größeren Abbaupartikel können daher zunächst nicht von der Staubsaugvorrichtung abgesaugt werden.

Um solche groben Abbaupartikel weiterverarbeiten und insbesondere mit der Staubsaugvorrichtung absaugen zu können, kann die Staubhaube eine Prallwand umfassen, wobei mit der Prallwand vorteilhafterweise eine Grobfilterwirkung bewirkt werden kann. Dadurch kann verhindert werden, dass große abgebrochene Abbauprodukte, die bei der Arbeit des Werkzeuggeräts entstehen und in den Innenbereich der Staubhaube gelangen können, den Saugbereich verstopfen. Vielmehr sorgt die Vorsehung der Prallwand vorteilhafterweise dafür, dass die groben Abbaupartikel von dem Prallblech abprallen und in den Arbeitsbereich des Werkzeuggerät bzw. in den Innenraum der Staubhaube zurückfallen, wo sie durch das Arbeitsmittel, beispielsweise eine Schneidscheibe, weiter verkleinert werden, bis die zerkleinerten Partikel durch Öffnungen des Schlauchbereichs passen und durch den Saugschlauch in die Staubsaugvorrichtung befördert werden können.

Es ist bekannt, dass die Arbeitsmittel eines Werkzeuggeräts bei hohen mechanischen Belastungen zerbrechen können. Ein solches unerwünschtes Zerbersten kann eine Gefahr für den Bediener des Werkzeuggeräts darstellen, beispielsweise wenn er von Splittern des zerborstenen Arbeitsmittels getroffen wird. Die Verletzungsgefahr wird insbesondere von scharfkantigen, spitzen oder scharfen Splittern hervorgerufen, die zu Schnittwunden führen können. Es ist im Sinne der Erfindung bevorzugt, dass einzelne Wandbereiche der Staubhaube doppelwandig ausgebildet sind, wobei die vorzugsweise doppelwandig ausgeführten Bereiche der Staubhaubenwand vorteilhafterweise bei einem möglichen Zerbersten eines Arbeitsmittels des Werkzeuggeräts die kinetische Energie der abgesplitterten Teile aufnehmen, wodurch der Bediener des Werkzeuggeräts besonders wirksam vor Verletzungen bzw. Splittereinwirkung geschützt wird. Das Arbeitsmittel des Werkzeuggeräts kann insbesondere von einer Schneid- oder Trennscheibe gebildet werden, beispielsweise wenn das Arbeitsgerät ein Trenn- oder Winkelschleifer ist. Es ist im Sinne der Erfindung bevorzugt, dass insbesondere die Bereiche der Staubhaubenwand, die beim Zerbersten der Schneid- oder Trennscheibe in Kontakt mit den entstehenden Splittern gelangen können, doppelwandig, d.h. insbesondere verstärkt ausgebildet sind, um den Bediener des Werkzeuggeräts vor Verletzungen zu bewahren.

Es kann im Sinne der Erfindung auch bevorzugt sein, dass die Wand der Staubhaube durchgehend doppelwandig ausgebildet ist. Ein durchgehend doppelwandig ausgebildeter Abschluss der Staubhaube kann beispielsweise aus Sicherheitsgründen vorteilhaft sein. Es kann auch bevorzugt sein, dass die Wand mindestens zweiwandig ausgebildet ist, wobei die Wand ganz oder teilweise über mehr als zwei Lagen verfügen oder aus mehr als zwei Lagen oder Einzelwänden gebildet sein kann. Bei einer zwei- oder mehrwandigen Ausführung der Wände oder Wandbereiche können die Bereich zwischen den Einzelwänden hohl ausgebildet sein oder mit einem Füllstoff gefüllt sein. Als Füllmaterialien können beispielsweise Leichtbaumaterialien verwendet werden, um das Gewicht der Staubhaube gering zu halten. Zum Beispiel kann ein Kunststoff-Schaummaterial als Füllung zwischen den Einzelwänden der Staubhaube verwendet werden. Die Einzelwände der Staubhaube weisen vorzugsweise eine Dicke in einem Bereich von 0,1 bis 3 mm auf, wobei eine Wandstärke in einem Bereich von 2 bis 3 mm besonders bevorzugt ist. In Summe weist die Staubhaubenwand vorzugsweise eine Wandstärke von mindestens 5 mm auf.

Vorzugsweise umfasst die Staubhaube einen elektrisch leitfähigen Grund-Werkstoff. Es ist mit anderen Worten bevorzugt, dass die Staubhaube bzw. ihre Wände von einem elektrisch leitfähigen Material gebildet werden. Vorzugsweise weist insbesondere die Innenseite der vorgeschlagenen Staubhaube den elektrisch leitenden Grund-Werkstoff auf. Durch die Vorsehung des elektrisch leitfähigen Grund-Werkstoffes wird vorteilhafterweise erreicht, dass statische Ladungen, die innerhalb der Staubhaube durch den häufig trockenen Staub entstehen können, über die Staubhaube an den Saugschlauch weitergeleitet werden. Dadurch wird als besonderer Vorteil der Erfindung eine Ableitung der elektrostatischen Ladungen über die Staubsaugvorrichtung gewährleistet. Es ist im Sinne ganz besonders bevorzugt, dass die Staubabführung vorzugsweise vollständig zusammenhängend elektrostatisch leitend ausgeführt ist. Insbesondere umfasst die Staubabführung die Bereiche von der Entstehung des Staubs bis zu seiner Lagerung im Staubbehälter. Es ist in einem Ausführungsbeispiel der Erfindung bevorzugt, dass die Staubhaube Wände aus einem elektrisch leitfähigen Material umfasst, wobei das Material statische Ladungen, die durch den trockenen Staub entstehen können, über die Staubhaube an den Saugschlauch weitergibt, wodurch vorteilhafterweise eine Ableitung über die Staubsaugvorrichtung gewährleistet werden kann. Vorzugsweise ist die ganze Staubabführung von der Entstehung bis zur Lagerung des Staubs im Staubbehälter zusammenhängend elektrostatisch leitend ausgeführt.

Beispielsweise kann elektrisch leitender oder leitfähiger Kunststoff als Grundstoff für die Staubhaube bzw. die Wände und Bestandteile der Staubhaube verwendet werden. Es kann im Sinne der Erfindung auch bevorzugt sein, dass ein leitender Zuschlagstoff dem Urgranulat für die Herstellung der Staubhaube bzw. ihrer Bestandteile beigemischt wird, wodurch vorteilhafterweise ein elektrostatisch leitfähiges Material erhalten wird. Beispielsweise können Metallspäne als Zuschlagstoff in den Kunststoff, der für die Produktion der Staubhaube bzw. ihrer Bestandteile verwendet wird, beigemischt werden.

Die elektrostatischen Ladungen innerhalb des Staubhaubenmaterials entstehen beispielsweise durch Reibung der Staubteilchen oder Staubpartikel an dem Kunststoffmaterial der Staubhaube, vorzugsweise bei Betrieb des Werkzeuggeräts bzw. bei Staubentstehung. Eine solche Aufladung findet insbesondere dann statt, wenn der Staub sehr trocken ist, also beispielsweise im Sommer oder bei langanhaltender Trockenheit. Es kann im Falle einer sehr starken elektrostatischen Aufladung zu einer unerwünschten spontanen Entladung über den Nutzer kommen, wenn die Ladungen nicht über eine entsprechende Erdung gezielt und bewusst abgeleitet werden. Dazu sind vorzugsweise auch die Übergänge zwischen den einzelnen Bestandteilen der Staubhaube elektrisch leitfähig ausgebildet, um eine Ladungsableitung zu ermöglichen.

Vorzugsweise ermöglicht die Vorsehung eines elektrostatisch leitenden Materials für die Staubhaube bzw. ihrer Bestandteile einen Ladungsausgleich innerhalb des Werkzeuggeräts. Dies ist insbesondere dann von Vorteil, wenn sich an unterschiedlichen Bereichen des Geräts Ladungsmengen mit unterschiedlichen Vorzeichen ansammeln und somit ein elektrisches Feld bilden. Durch das vorzugsweise elektrisch leitfähige Material der Staubhaube kann hier eine Möglichkeit zum Ladungsausgleich geschaffen werden, indem ein Elektronenüberschuß in einem Bereich des Geräts abfließen und einen Elektronenmangel in einem anderen Bereich des Geräts ausgleichen kann. Durch die Vermeidung eines unkontrollierten Entladungs- bzw. Ladungsausgleichsvorgangs kann insbesondere auch ein Funkenflug und damit eine Feuergefahr beim Betrieb des Werkzeuggeräts erheblich reduziert werden.

Es ist im Sinne der Erfindung bevorzugt, dass der Innenbereich der Staubhaube strömungsdynamisch homogen ausgebildet ist, so dass aerodynamische Verwirbelungen in dem Innenraum besonders wirksam vermieden werden. Der Innenbereich der Staubhaube umfasst insbesondere den Bereich im bevorzugt hohlen Innenraum der Staubhaube, in dem durch den Betrieb des Werkzeuggeräts der Staub entsteht. Dieser Bereich kann im Sinne der Erfindung bevorzugt auch als Arbeitsbereich des Werkzeuggeräts oder des Arbeitsmittels bezeichnet werden. Beispielsweise kann das Arbeitsgerät ein Trenn- oder Winkelschleifer sein, der als Arbeitsmittel eine Schneid- oder Trennscheibe umfasst. Es ist im Sinne der Erfindung insbesondere bevorzugt, dass der Innenraum der Staubhaube einen Arbeitsbereich des Arbeitsmittels umfasst, wobei es sich dabei in einer bevorzugten Ausgestaltung der Erfindung bei dem Arbeitsmittel um eine Schneid- oder Trennscheibe handeln kann. Durch die strömungs- bzw. aerodynamisch homogen Ausbildung des Innenraums der Staubhaube kann insbesondere ein besonders staubfreies Arbeiten mit dem Werkzeuggerät gewährleistet werden. Es ist im Sinne der Erfindung ganz besonders bevorzugt, dass vor allem die Innenwände der Staubhaube, die vorzugsweise den Innenraum der Staubhaube begrenzen, strömungs- bzw. aerodynamisch homogen ausgebildet sind. Die strömungs- bzw. aerodynamisch homogene Ausbildung des Innenraums der Staubhaube kann beispielsweise durch die Vorsehung von besonders glatten Innenwänden erreicht werden. Es kann im Sinne der Erfindung auch bevorzugt sein, dass die Geometrie bzw. die räumliche Gestaltung des Staubhauben-Innenraums zu der strömungs- bzw. aerodynamisch homogenen Ausbildung des Innenraums der Staubhaube führt bzw. beiträgt.

In einer bevorzugten Ausführungsform der Erfindung umfasst die Staubhaube eine Prallwand als abrasiven Verschleißschutz bzw. als Temperaturschutz. Es ist im Sinne der Erfindung bevorzugt, dass die Prallwand an einer vorderen Seite der Staubabweiser angeordnet vorliegt. Ein Staubabweiser stellt im Sinne der Erfindung bevorzugt eine Vorrichtung dar, die der verbesserten Zuführung bzw. Ablenkung von Staubpartikeln in den Absaugbereich der Staubhaube dient. Wenn die Prallwand ein Metall oder eine Metalllegierung umfasst bzw. von einem Metallgitter gebildet wird, kann die Prallwand auch zum Schutz der Kunststoffteile der Staubhaube vor Funken bzw. Funkenflug dienen. Vorzugsweise ist die Prallwand abrasiv hochbeständig ausgebildet, um der starken mechanischen und/oder thermischen Belastung durch die Staubpartikel und/oder durch Funken standzuhalten. Durch die Vorsehung der Prallwand als Schutz für die Kunststoffbestandteile der Staubhaube kann vorteilhafterweise die Lebensdauer der vorgeschlagenen Staubhaube erheblich verlängert werden. Vorzugsweise nimmt die Prallwand auch thermische Energie, d.h. Wärme, auf und sorgt so durch ihre gute Wärmeleitfähigkeit für eine Abkühlung innerhalb der Staubhaube. Die Prallwand kann insbesondere von einem Prallblech gebildet werden, wobei die Prallwand vorzugsweise an einer Innenseite der Staubabweiser angeordnet vorliegt. Es kann in einer Ausgestaltung der Erfindung bevorzugt sein, dass die Prallwand von einem Gitter gebildet wird, das beispielweise Metall umfasst oder aus Metall gebildet ist.

Vorzugsweise wird die Staubhaube von zwei zueinander korrespondieren Hälften gebildet, die zusammen einen Grundkörper der Staubhaube bilden. Die Befestigung der Prallwand erfolgt vorzugsweise durch ein Verklemmen der beiden Staubhauben-Hälften. Es war vollkommen überraschend, dass durch die Vorsehung der Prallwand im Innenraum der Staubhaube im Bereich der Staubabweiser ein zusätzlicher abrasiver Verschleißschutz in Kombination mit einem weiteren Berstschutz bereitgestellt werden kann. Ein weiterer Vorteil der vorgesehenen Prallwand besteht darin, dass mit ihr eine Grobfilterung des Staubs erreicht werden kann, wobei mit der Grobfilterung vor allem große Abbaupartikel, die zunächst nicht mit dem Saugschlauch der Staubsaugvorrichtung abgesaugt werden können, in den Innenraum der Staubhaube zurückgeworfen werden, so dass sie mit der Schneidscheibe des Werkzeuggeräts weiter zerkleinert werden können. Durch die Zerkleinerung werden kleiner Abbaupartikel erhalten, deren Größe es vorteilhafterweise ermöglicht, dass die zerkleinerten Abbaupartikel durch den Saugschlauch passen und mit der Staubsaugvorrichtung abgesaugt werden können.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Schnittdarstellung durch eine bevorzugte Ausgestaltung der Staubhaube
- Fig. 2: Schnittdarstellung einer bevorzugten Ausführungsform des Absaugbereichs der Staubhaube
- Fig. 3: Ansicht einer bevorzugten Ausgestaltung der Prallwand
- Fig. 4: Ansicht einer bevorzugten Ausführungsform einer Staubhauben-Baugruppe

### Ausführungsbeispiele:

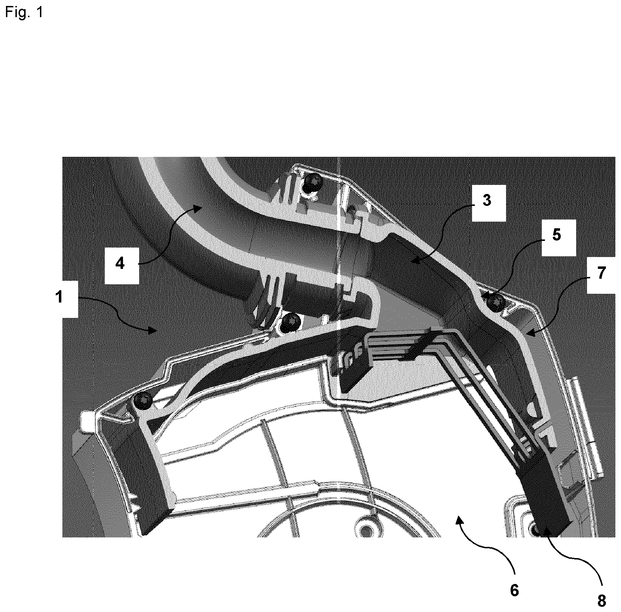

Figur 1 zeigt eine Schnittdarstellung durch eine bevorzugte Ausgestaltung der vorgeschlagenen Staubhaube (1). Insbesondere zeigt Figur 1 die Wölbung (5), die vorzugsweise in einer Wand der Staubhaube (1) vorliegt. Es ist im Sinne der Erfindung insbesondere bevorzugt, dass die Wölbung (5) in der Wand angeordnet vorliegt, die dem Ausgang eines Saugschlauches (4) gegenüberliegt. Der Bereich der Staubhaube (1), in den der Saugschlauch (4) einmündet, wird vorzugsweise auch als Absaugbereich (3) der Staubhaube (1) bezeichnet. Der Saugschlauch (4) verbindet vorzugsweise die Staubhaube (1) mit einer Staubsaugvorrichtung (nicht dargestellt), wobei mit dem Saugschlauch (4) vorzugsweise sowohl der Unterdruck, den die Staubsaugvorrichtung zum Einsaugen des Staubs erzeugt, als auch die Impulsstöße, die bei der Filterabreinigung erzeugt werden, von der Staubsaugvorrichtung auf die Staubhaube (1) übertragen werden. Die Impulsstöße, die von der Staubsaugvorrichtung bei der Filterabreinigung erzeugt und mit dem Saugschlauch (4) in die Staubhaube (1) geleitet werden, können beispielsweise einen Impuls-Druckstrahl bilden, der bei der vorgeschlagenen Staubhaube (1) zunächst auf den Wölbungsbereich (5) der Staubhaubenwand trifft. Der Impuls-Druckstrahl wird vorzugsweise durch die konkrete Ausgestaltung der Wölbung (5) aufgespalten und in verschiedene Richtungen ab- bzw. umgelenkt. Insbesondere kommt es im Wölbungsbereich (5) der Staubhaube (1) zu Überlagerungen der reflektierten Impulsstöße, so dass sich die reflektierten Impulsstöße vorteilhafterweise gegenseitig schwächen oder auslöschen.

Durch diese Abschwächung bzw. Auslöschung der reflektierten Impulsstöße wird als besonderer Vorteil der Erfindung erreicht, dass die Impulsstöße nicht weiter in den Innenraum (6) der Staubhaube (1) eindringen. Dies führt vorteilhafterweise dazu, dass im Innenraum (6) der Staubhaube (1) der Unterdruck auch während der Abreinigung des Filters der Staubsaugvorrichtung aufrechterhalten werden kann. Dadurch wird der Nachteil von konventionellen Staubhauben überwunden, die während der Filterabreinigung der Staubsaugvorrichtung häufig eine Wolke aus Staubpartikeln aus einzelnen Öffnungen herausblasen. Durch die Aufrechterhaltung des Unterdrucks im Innenraum (6) der vorgeschlagenen Staubhaube (1) wird eine solche Abgabe einer Staubwolke vorteilhafterweise vermieden, so dass die Belastung der Atemwege eines Bedieners des Werkzeuggeräts (2, nicht dargestellt) durch die Erfindung wesentlich reduziert werden kann.

Während der Aufrechterhaltung des Unterdrucks während der Zeit der Filterabreinigung kann der in dieser Zeit durch die Arbeit des Werkzeuggeräts (2) entstehende Staub vorteilhafterweise im Innenraum (6) der Staubhaube (1) gesammelt werden. Nach Beendigung der Filterabreinigung kann die Staubsaugvorrichtung wieder Unterdruck erzeugen, der mit dem Saugschlauch (4) an die Staubhaube (1) übertragen werden kann. Dadurch können nach Beendigung der Filterabreinigung die Staubpartikel, die während der Filterabreinigung in der Staubhaube (1) gesammelt werden, durch den Saugschlauch (4) abgesaugt und in einem Sammelbehälter der Staubsaugvorrichtung aufbewahrt werden.

Darüber hinaus zeigt Figur 1 einzelne Bereiche der Wände (7) der Staubhaube (1), die zumindest teilweise doppelwandig ausgebildet sind. Dadurch sind die Bereiche der Wand (7) der Staubhaube (1) stabiler ausgebildet und bieten dem Bediener des Werkzeuggeräts (2) einen verbesserten Schutz, beispielsweise wenn ein Arbeitsmittel des Werkzeuggeräts (2) beschädigt wird oder zerbricht. Bei einer solchen Beschädigung entstehende Splitter können von den vorzugsweise doppelwandig ausgebildeten Bereichen der Staubhabenwand (7) aufgefangen werden, wodurch vorteilhafterweise ein Austreten der Splitter aus der Staubhaube (1) heraus vermieden werden kann. Darüber hinaus können vor allem die Außenwände der zumindest teilweise doppelwandig ausgebildeten Staubhaubenwände (7) elastische Eigenschaften haben, die dazu führen, dass die doppelwandig ausgebildeten Wandbereiche (7) beispielsweise Verformungskräfte im Falle eines Sturzes der Staubhaube (1) bzw. des Werkzeuggeräts (2) aufnehmen können. Dadurch gewährleisten die doppelwandig ausgebildeten Wandbereiche (7) vorteilhafterweise auch einen verbesserten Fallschutz der vorgeschlagenen Staubhaube (1) bzw. des Werkzeuggeräts (2).

Es ist im Sinne der Erfindung bevorzugt, dass die Vorrichtungskette des inneren Staubbereiches elektrostatisch leitend gestaltet ist. Dadurch werden vorteilhafterweise auftretende elektrostatische Ladungen an den Saugschlauch (4) bis hin zur Staubsaugvorrichtung abgeleitet, wo sie anschließend sicher über den Erdleiter in den Untergrund abgeleitet werden können. Vorteilhafterweise kann auf diese Weise eine Ableitung von Ladungen sowohl bei netz-, als auch bei ackubetriebenen Werkzeuggeräten (2) ermöglicht werden.

In der in Figur 1 dargestellten bevorzugten Ausführungsform der Erfindung ist auch eine Prallwand (8) abgebildet. Die Prallwand (8) in dem in Figur 1 dargestellten Ausführungsbeispiel ist als Metallgitter ausgebildet. Das Metallgitter (8) kann größere Staub- oder Steinpartikel, die im Sinne der Erfindung vorzugsweise auch als Abbaupartikel bezeichnet werden, davon abhalten, in den Absaugbereich (3) der Staubhaube (1) zu gelangen. Mit anderen Worten markiert die Prallwand (8) eine Grenze zwischen dem Innenraum (6) der Staubhaube (1), der im unteren Bereich der Staubhaube (1) vorliegt, und einem Absaugbereich (3) der Staubhaube (1), der in einem oberen Bereich der Staubhaube (1) vorliegt. Die Prallwand (8) sorgt vorzugsweise dafür, dass die größeren Staub- oder Steinpartikel zurück in den Innenraum (6) der Staubhaube (1) geworfen werden, wo sie erneut bzw. weiter zerkleinert werden können, wenn sie in den Arbeitsbereich des Arbeitsmittels des Werkzeuggeräts (2) gelangen. Wenn die Staub- oder Steinpartikel nach der erneuten Bearbeitung durch das Arbeitsmittel des Werkzeuggeräts (2) einen Durchmesser aufweisen, der durch die Öffnungen der Prallwand (8) passt, können die Abbaupartikel in den Absaugbereich (3) der Staubhaube (1) gelangen und dort von der Staubsaugvorrichtung abgesaugt werden. Dazu werden die Partikel zunächst in den Saugschlauch (4) und anschließend in den Sammelbehälter der Staubsaugvorrichtung gesaugt.

Figur 2 zeigt die Schnittdarstellung einer bevorzugten Ausführungsform des Absaugbereichs (3) der Staubhaube (1). Dabei handelt es sich vorzugsweise um den oberen Bereich der Staubhaube (1), in den der Saugschlauch (4) der Staubsaugvorrichtung einmündet. Vorzugsweise gegenüber von dieser Einmündung des Saugschlauches (4) in die Staubhaube (1) liegt die Wölbung (5) angeordnet, die vorteilhafterweise eine Aufteilung und/oder Umlenkung der Impulsstöße der Staubsaugvorrichtung bewirkt. Es ist im Sinne der Erfindung bevorzugt, dass die Wölbung (5) eine Brechung des Impulsdruckstoßes bewirkt, so dass der Impulsdruckstoß dergestalt abgeschwächt wird, dass er nicht mehr in den Innenraum (6) der Staubhabe (1) gelangen kann. Die Wölbung (5) stellt in dem in Figur 2 dargestellten Ausführungsbeispiel der Erfindung eine Delle dar, d.h. eine konkave Eindellung in dem Bereich der Wand der Staubhaube (1), der der Einmündung des Saugschlauches (4) gegenüberliegt. Insbesondere stellt eine Delle im Sinne der Erfindung bevorzugt eine Einbuchtung dar, d.h. einen Bereich, in dem eine Wölbung ins Innere der Staubhaube (1) hinein vorliegt. Die Impulsstöße, die während der Filterabreinigung von der Staubsaugvorrichtung abgegeben werden, werden sich vorzugsweise bei Austritt aus dem Saugschlauch (4) geradlinig weiterbewegen und treffen so unter einem bestimmten Winkel, der von dem Verlauf des gewölbten Wandbereichs bestimmt wird, auf die Staubhaubenwand. Der Begriff «gewölbter Wandbereich» steht im Sinne der Erfindung bevorzugt für den Wandbereich der Staubhaube (1), der die Wölbung (5) der Staubhaubenwand umfasst.

Die Impulsstöße werden entsprechend des Aufprallwinkels von der Wand der Staubhaube (1) reflektiert und in den Absaugbereich (3) der Staubhaube (1) geworfen. Der der Einmündung des Saugschlauches (4) gegenüberliegende Wandbereich der Staubhaube (1), der vorzugsweise auch die Wölbung (5) umfasst, ist insbesondere so beschaffen, dass sich die reflektierten Impulsstöße aufgrund von Überlagerungseffekten gerade auslöschen oder zumindest stark schwächen. Dadurch können die Impulse nicht mehr weiter in den Innenraum (6) der Staubhaube (1) vordringen. Dies führt überraschenderweise dazu, dass ein Zusammenbrechen des Unterdrucks im Innenraum (6) der Staubhaube (1) wirksam vermieden werden kann, so dass in der Zeit der Filterabreinigung insbesondere keine Staubwolken aus dem Inneren der vorgeschlagenen Staubhaube (1) nach außen in die Umgebung des Werkzeuggeräts (2) herausgeblasen bzw. herausgepustet werden. Die Wölbung (5) innerhalb der Staubhaubenwand führt insbesondere dazu, dass sich die reflektierten Impulsstöße praktisch auffächern und in unterschiedliche Richtungen gestreut werden, wobei sich die reflektierten Impulsstöße aufgrund des geringen zu Verfügung stehenden Raums im Absaugbereich (3) der Staubhaube (1) vorteilhafterweise so überlagern, dass sie sich wesentlich abschwächen oder ganz ausgelöscht werden. Mithin werden die zunächst im Wesentlichen parallel auf die Staubhaubenwand auftreffenden Impulsstöße in den gesamten Absaugbereich (3) der Staubhaube (1) reflektiert, wo sie sich gegenseitig abschwächen. Diese Reflektion bzw. Brechung der Impulsstöße wird insbesondere im unteren Teil von Figur 2 dargestellt. Die schwarzen Pfeile stellen dabei bevorzugt einen gedanklich in einzelne Impulsstöße zerlegten Impulsstoß dar. Diese Einzelimpulsstöße, die von der Staubsaugvorrichtung während der Filterabreinigung erzeugt werden, werden an der gewölbten Staubhaubenwand gebrochen bzw. reflektiert und in den Absaugbereich (3) der Staubhaube (1) umgelenkt. Die reflektierten bzw. gebrochenen gedanklichen Einzelimpulse werden in Figur 2, unten, vorzugsweise mit weißen Pfeilen dargestellt.

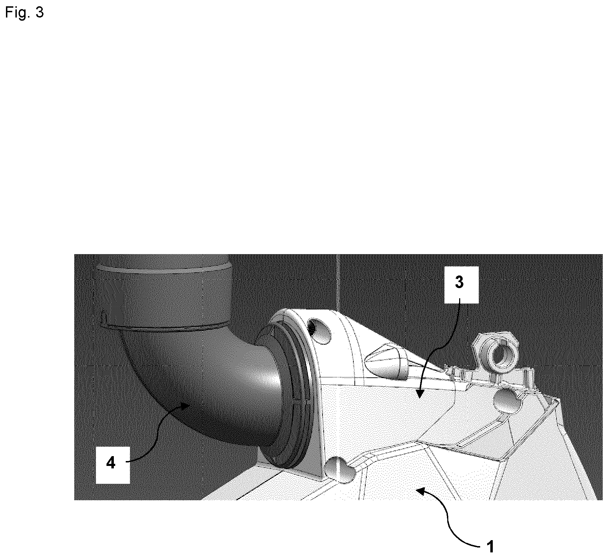

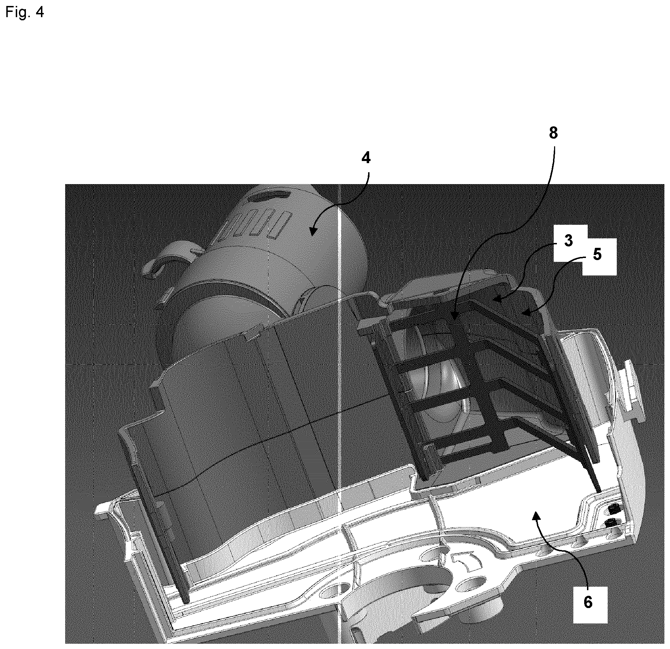

Figur 3 zeigt eine Ansicht einer bevorzugten Ausführungsform einer Staubhauben-Baugruppe. Dargestellt in Figur 3 ist insbesondere eine bevorzugte Ausgestaltung einer vorgeschlagenen Staubhaube (1). Figur 3 zeigt insbesondere den oberen Bereich der Staubhaube (1), der von einem Absaugbereich (3) gebildet wird. In diesen Absaugbereich (3) mündet eine Saugschlauch (4), der die Staubhaube (1) mit einer Staubsaugvorrichtung verbindet. In einem unteren Bereich der Staubhaube (1) liegt der Innenraum (6) der Staubhaube (1) vor, der mit einer Prallwand (8, siehe Fig. 4) von dem Absaugbereich (3) getrennt wird.

Figur 4 zeigt eine Ansicht einer bevorzugten Ausgestaltung der Prallwand (8) der vorgeschlagenen Staubhaube (1). Oberhalb der Prallwand (8), die im abgebildeten Ausführungsbeispiel der Erfindung als Metallgitter ausgebildet ist, befindet sich der Ansaugbereich (3) der Staubhaube (1) mit Wölbung (5). Die Wölbung (5) bzw. der gewölbte Wandbereich der Staubhaube (1) ist vorzugsweise gegenüber der Einmündung des Saugschlauches (4) angeordnet, mit dem die Staubhaube (1) mit einer Staubsaugvorrichtung verbunden werden kann. Unterhalb des Metallgitters (8) befindet sich der Innenbereich (6) der Staubhaube (1), in dem beispielsweise das Arbeitsmittel des Werkzeuggeräts (2) vorliegen kann.

Es ist im Sinne der Erfindung bevorzugt, dass die Staubhaube (1) zwei Schalen oder Hälften umfasst, die einen Grundkörper der Staubhaube (1) bilden. Die beiden Schalen halten das Metallgitter (8) und klemmen es ein. Somit werden große abgeplatzte Abbauteile oder Abbaupartikel zurückgehalten und verstopfen nicht den Saugschlauch (4). Dadurch wird ein sicheres Arbeiten mit dem Werkzeuggerät (2) bzw. der Staubsaugvorrichtung ohne Unterbrechungen durch verstopfte Schlauchleitungen möglich. Darüber hinaus verringert die Vorsehung einer Prallwand (8) das Entstehen einer Staubwolke, welche beim Verstopfen der Absaugleitung als nachteilige Folge eintreten kann.

### Bezugszeichenliste

- 1: Staubhaube
- 2: Werkzeuggerät
- 3: Absaugbereich
- 4: Saugschlauch
- 5: Wölbung
- 6: Innenbereich der Staubhaube
- 7: doppelwandige Wand der Staubhaube
- 8: Prallwand

## Patentansprüche

1. Staubhaube (1) für ein Werkzeuggerät (2), wobei die Staubhaube einen Absaugbereich (3) umfasst, in den ein von einer Staubsaugvorrichtung kommender Saugschlauch (4) in die Staubhaube (1) einmündet,
wobei die Staubhaube (1) im Absaugbereich (3) eine Wölbung (5) aufweist, **dadurch gekennzeichnet, dass** die Wölbung (5) dazu eingerichtet ist, einen von der Staubsaugvorrichtung kommenden und durch den Saugschlauch (4) in einen Innenbereich (6) der Staubhaube (1) vermittelten Impulsstoß abzuschwächen, wobei die Abschwächung einen Gegenimpuls bewirkt, wobei mit dem Gegenimpuls verhindert wird, dass im Innenbereich (6) der Staubhaube (1) der ein von der Staubsaugvorrichtung erzeugter und vom Saugschlauch (4) vermittelter Unterdruck im Zeitpunkt einer Filterabreinigung wobei
die Wölbung (5) durch ein Verhältnis von Höhe zu Durchmesser definiert wird und das Verhältnis dabei in einem Bereich von 0,14 bis 1,7 liegt.

2. Staubhaube (1) nach Anspruch 1
**dadurch gekennzeichnet, dass**
einzelne Wandbereiche (7) der Staubhaube (1) doppelwandig ausgebildet sind.

3. Staubhaube (1) nach einem der vorhergehenden Ansprüche
**dadurch gekennzeichnet, dass**
die Staubhaube (1) einen elektrisch leitfähigen Grund-Werkstoff umfasst.

4. Staubhaube (1) nach einem der vorhergehenden Ansprüche
**dadurch gekennzeichnet, dass**
der Innenbereich (6) der Staubhaube (1) strömungsdynamisch homogen ausgebildet ist, so dass aerodynamische Verwirbelungen in dem Innenraum (6) besonders wirksam vermieden werden.

5. Staubhaube (1) nach einem der vorhergehenden Ansprüche
**dadurch gekennzeichnet, dass**
die Staubhaube (1) eine Prallwand (8) als abrasiven Verschleißschutz und Temperaturschutz umfasst.

6. Staubhaube (1) nach Anspruch 5
**dadurch gekennzeichnet, dass**
die Prallwand (8) den Absaugbereich (3) vom Innenbereich (6) der Staubhaube (1) trennt.

## Claims

1. Dust hood (1) for a power tool (2), wherein the dust hood comprises an extraction region (3) in which a suction hose (4) coming from a dust-sucking device opens into the dust hood (1),
wherein
the dust hood (1) has a curvature (5) in the extraction region (3), **characterized in that** the curvature (5) is designed to attenuate an impulse surge coming from the dust-sucking device and conveyed through the suction hose (4) into an inner region (6) of the dust hood (1), wherein the attenuation produces a counter-impulse, wherein the counter-impulse prevents a situation in which, in the inner region (6) of the dust hood (1), the vacuum generated by the dusk-sucking device and conveyed by the suction hose (4) at the time of a filter cleaning, wherein
the curvature (5) is defined by a ratio of height to diameter and the ratio lies in a range from 0.14 to 1.7.

2. Dust hood (1) according to Claim 1,
**characterized in that**
individual wall regions (7) of the dust hood (1) are of double-walled design.

3. Dust hood (1) according to either of the preceding claims,
**characterized in that**
the dust hood (1) comprises an electrically conductive base material.

4. Dust hood (1) according to one of the preceding claims,
**characterized in that**
the inner region (6) of the dust hood (1) is designed to be homogeneous in terms of flow dynamics, with the result that aerodynamic turbulence in the interior (6) is particularly effectively avoided.

5. Dust hood (1) according to one of the preceding claims,
**characterized in that**
the dust hood (1) comprises a baffle (8) as abrasive wear protection and temperature protection.

6. Dust hood (1) according to Claim 5,
**characterized in that**
the baffle (8) separates the extraction region (3) from the inner region (6) of the dust hood (1).

## Revendications

1. Capot anti-poussière (1) pour une machine-outil (2), le capot anti-poussière comprenant une zone d'évacuation par aspiration (3) dans laquelle un tuyau d'aspiration (4) provenant d'un aspirateur débouche dans le capot anti-poussière (1),
le capot anti-poussière (1) comportant dans la zone d'évacuation par aspiration (3) un bombement (5), **caractérisé en ce que** le bombement (5) est mis au point pour atténuer un choc d'impulsion provenant de l'aspirateur et transmis par le tuyau d'aspiration (4) dans une zone intérieure (6) du capot anti-poussière (1), l'atténuation provoquant une contre-impulsion, la contre-impulsion permettant d'empêcher que la dépression générée par l'aspirateur et transmise par le tuyau d'aspiration (4) au moment d'un nettoyage du filtre dans la zone intérieure (6) du capot anti-poussière (1),
le bombement (5) étant défini par un rapport entre la hauteur et le diamètre et le rapport se situant dans une plage de 0,14 à 1,7.

2. Capot anti-poussière (1) selon la revendication 1,
**caractérisé en ce que**
des zones de paroi (7) individuelles du capot anti-poussière (1) sont à double paroi.

3. Capot anti-poussière (1) selon l'une des revendications précédentes,
**caractérisé en ce que**
le capot anti-poussière (1) comprend un matériau de base électriquement conducteur.

4. Capot anti-poussière (1) selon l'une des revendications précédentes,
**caractérisé en ce que**
la zone intérieure (6) du capot anti-poussière (1) est homogène en matière de dynamique d'écoulement, de telle sorte que des turbulences aérodynamiques sont évitées de manière particulièrement efficace dans l'espace intérieur (6).

5. Capot anti-poussière (1) selon l'une des revendications précédentes,
**caractérisé en ce que**
le capot anti-poussière (1) comprend un déflecteur (8) en tant que protection contre l'usure abrasive et protection contre la température.

6. Capot anti-poussière (1) selon la revendication 5,
**caractérisé en ce que**
le déflecteur (8) sépare la zone d'évacuation par aspiration (3) de la zone intérieure (6) du capot anti-poussière (1).
